# EUROPÄISCHE PATENTANMELDUNG

(11) **EP 1 103 727 A2**
(43) Veröffentlichungstag der Anmeldung: **30.05.2001**
(21) Anmeldenummer: 00890318.9
(22) Anmeldetag: 19.10.2000
(51) Int. Cl.: F15B 13/10, E05F 15/02, E05F 15/04, B60J 7/12, B62D 25/12

(54) **Hydraulische Betätigungsanordnung**

(30) Priorität: 26.11.1999 AT 200899
(71) Anmelder: Hoerbiger Hydraulik GmbH, 86956 Schongau (DE)
(72) Erfinder: Huber, Gerhard, 87662 Frankenhofen (DE)
(74) Vertreter: Pinter, Rudolf, Dipl.-Ing.

(57) **Zusammenfassung**

Die beiden Arbeitsräume (2, 2';3) des Arbeitszylinders (1) einer hydraulischen Betätigungsanordnung sind bedarfsweise über ein schaltbares 2-Stellungsventil (11) direkt verbindbar, womit unabhängig von der den Arbeitszylinder (1) ansteuernden hydraulischen Schaltungsanordnung (6) bzw. auch bei ausgefallener oder abgeschalteter Druckmittelquelle (7) eine weitgehend widerstandslose händische Verstellung des zu betätigenden Elementes möglich ist.

## Beschreibung

Die Erfindung betrifft eine hydraulische Betätigungsanordnung, insbesondere für Deckel, Türen, Verdecke und dergleichen an Fahrzeugen, mit zumindest einem doppelt wirkenden Arbeitszylinder, dessen Arbeitsräume über eine hydraulische Schaltungsanordnung mit je einer Seite einer umschaltbaren Druckmittelquelle in Verbindung stehen.

Betätigungsanordnungen der genannten Art sind in vielfältigster Ausführung bekannt, wobei über die Art bzw. Auslegung der Schaltungsanordnung die gewünschten Funktionen realisiert werden. In den meisten Fällen ist dabei aus Sicherheitsgründen vorgesehen, dass bei Ausschaltung bzw. Ausfall der Druckmittelquelle beide Arbeitsräume durch Rückschlagventile oder dergleichen Schaltelemente in der Schaltungsanordnung abgesperrt sind, womit der Kolben des Arbeitszylinders gesperrt in der jeweiligen Stellung stehen bleibt und beispielsweise ein Klappverdeck, eine Kofferraumklappe oder dergleichen sich nicht von selbst weiterbewegen bzw. ungewollt verstellen kann.

Um dabei dann einen Notbetrieb bzw. auch einen gewollten Handbetrieb bei nicht zur Verfügung stehender Druckmittelquelle zu ermöglichen, sind verschiedenste Maßnahmen bekannt geworden, die beispielsweise ein händisches Überdrücken eines an einem Druckbegrenzungsventil eingestellten Grenzdruckes durch eine an einer zu betätigenden Tür angreifende Bedienungsperson und damit das händische Schließen dieser Tür ermöglichen. In allen Fällen bleibt dabei aber der Nachteil, dass auch bei einer gewollten Handbetätigung die entsprechenden Drücke aufzubringen und die entsprechenden Systemwiderstände zu überwinden sind, was zumeist störend und manchmal auch unpraktikabel ist.

Aufgabe der vorliegenden Erfindung ist es, auf einfache Weise eine Notbetätigung bzw. gewollte Handbetätigung der im Normalfall mit einer hydraulischen Betätigungsanordnung der eingangs genannten Art verstellten Elemente zu ermöglichen und damit die beschriebenen Nachteile derartiger Betätigungsanordnungen zu vermeiden.

Diese Aufgabe wird bei einer Betätigungsanordnung der eingangs genannten Art ge-mäß der vorliegenden Erfindung dadurch gelöst, dass die beiden Arbeitsräume des Arbeitszylinders über ein schaltbares Zwei-Stellungsventil direkt verbindbar sind. Dieses Ventil kann zweckmäßig beispielsweise in relativer Nähe zum jeweiligen Arbeitszylinder einfach parallel zum Arbeitszylinder zwischen die beiden Mediumanschlüsse eingeschaltet sein, womit sich in der Offenstellung sehr kurze Wege für das vom einen in den anderen Arbeitsraum überzu-schiebende Medium ergeben. In der geschlossenen Stellung dieses Ventils bleibt die sonstige Funktion der hydraulischen Schaltungsanordnung völlig unverändert. Damit ist üblicherweise bei abgeschalteter bzw. ausgefallener Druckmittelquelle der Arbeitszylinder beidseitig wie beschrieben gesperrt und damit das über die Betätigungsanordnung zu verstellende Element festgehalten.

Im Falle der gewünschten Betätigung des zu verstellenden Elementes von Hand kann einfach das Zwei-Stellungsventil, gegebenenfalls über eine Hebelanordnung, manuell oder bevorzugt auch über ein elektrisches Schaltelement umgeschaltet werden. Damit ist es beispielsweise möglich, bei gewolltem Öffnen eines Kofferraumdeckels eines PKW von Hand, ohne dass vorher das Fahrzeug gestartet und damit die Druckmittelquelle aktiviert wird, das Zwei-Stellungsventil über einen zusätzlichen oder mit dem Kofferraumschloss kombinierten Betätigungshebel zu öffnen, wonach der Kofferraumdeckel praktisch ohne zusätzlichen hydraulischen Widerstand geöffnet werden kann.

Das Zwei- Stellungsventil ist in weiterer Ausgestaltung der Erfindung als Sitzventil ausgebildet, was eine einfache und zuverlässige Wirkung mit einem einfachen und kostengünstigen Bauelement sicherstellt.

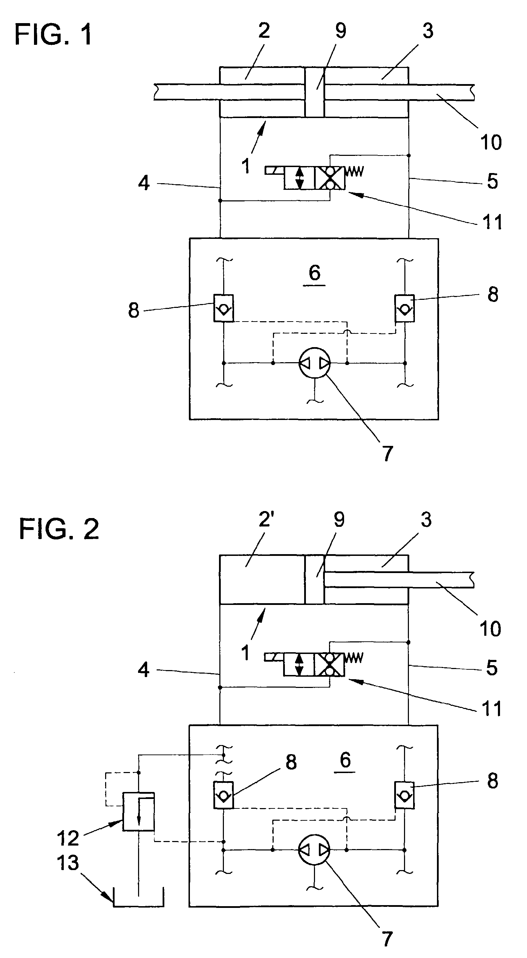

Die Erfindung wird im folgenden noch anhand der in der Zeichnung schematisch dargestellten Schaltpläne einer hydraulischen Betätigungsanordnung näher erläutert. Fig. 1 zeigt dabei eine erfindungsgemäße Betätigungsanordnung mit einem Arbeitszylinder, dessen Kolbenstange beidseitig aus dem Zylinderraum herausgeführt ist (Gleichgangzylinder) und Fig. 2 zeigt ein Beispiel mit einer nur einseitig herausgeführten Kolbenstange am Arbeitszylinder.

Beide Betätigungsanordnung weisen einen doppelt wirkenden Arbeitszylinder 1 auf, dessen Arbeitsräume 2, 2' und 3 über eine an Leitungen 4, 5 angeschlossene hydraulische Schaltungsanordnung 6 mit je einer Seite einer umschaltbaren Druckmittelquelle 7 (hier integriert in die Schaltungsanordnung 6 - könnte aber natürlich auch unabhängig davon vorgesehen sein) in Verbindung stehen. Die Schaltungsanordnung 6 ist hier nur schematisch zu verstehen - insbesonders ist darauf hinzuweisen, dass in beiden Fällen nur beispielhaft zwei gegenseitig entsperrbare Rückschlagventile 8 dargestellt sind, welche bei abgeschalteter bzw. ausgefallener Druckmittelquelle 7 beide Arbeitsräume 2, 2' und 3 der Arbeitszylinder 1 absperren und damit den Kolben 9 bzw. die Kolbenstange 10 in der jeweiligen Stellung hydraulisch fixieren. Weitere üblicherweise vorgesehene und verschiedenste Funktionen ermöglichende Schaltelemente sind in den Schaltungsanordnungen 6 der Einfachheit halber weggelassen.

Um auch bei ausgeschalteter bzw. ausgefallener Druckmittelquelle 7 und damit wie beschrieben gesperrtem Arbeitszylinder 1 eine gewollte Verstellung eines über die Kolbenstange 10 zu betätigenden, hier nicht dargestellten Elementes, wie etwa eines Cabriover-decks, einer Kofferraumklappe oder dergleichen, zu ermöglichen, ist in beiden dargestellten Fällen vorgesehen, dass die beiden Arbeitsräume 2, 2' und 3 des Arbeitszylinders 1 über ein schaltbares 2-Stellungsventil 11 direkt verbindbar sind, welches parallel zum Arbeitskolben 1 mit den Leitungen 4, 5 verbunden ist. Im schematisch dargestellten Fall ist dieses Ventil 11 als einseitig federbelastetes elektromagnetisch betätigtes Sitzventil ausgebildet - es könnte hier aber auch jedes andere entsprechende Schaltelement zum Einsatz kommen. Im Normalfall ist dieses Ventil 11 wie in beiden Figuren eingezeichnet gesperrt, womit keine direkte Verbindung der beiden Arbeitsräume 2, 2' und 3 möglich ist und die Funktion der Gesamtanordnung von der hydraulischen Schaltungsanordnung 6 bestimmt wird. Im Falle einer gewünschten Verstellung des Kolbens 9 im Arbeitszylinder 1 unabhängig von der Schaltungsanordnung 6 bzw. der Druckmittelquelle 7 wird das Ventil 11 in die andere Schaltstellung umgeschaltet, womit auf kurzem verlustfreiem Wege ein Überschieben des Volumens zwischen den beiden Arbeitsräumen 2, 2' und 3 möglich wird.

Bei der Anordnung gemäß Fig. 1 ist das Volumen der Arbeitsräume 2 und 3 gleich, sodass keine weiteren Vorkehrungen zur Ermöglichung eines Überschiebens über das Ventil 11 zu treffen sind. Bei der Anordnung nach Fig. 2 ist das bei einer Bewegung des Kolbens 9 im Arbeitszylinder 1 geänderte Volumen des Arbeitsraums 2' stets größer als das entsprechend geänderte Volumen des Arbeitsraums 3, da auf der einen Seite die Kolbenstange 10 fehlt. Zum Ausgleich ist hier in bzw. an der Schaltungsanordnung 6 ein zusätzliches, hier entsperrbares Druckbegrenzungsventil 12 vorgesehen, welches überschüssiges Druckmedium zum Tank 13 hin absteuert. Entsprechende Vorkehrungen könnten bedarfsweise auch zur Ermöglichung eines Nachsaugens aus dem Tank vorgesehen werden, was aber an sich bekannt und hier nicht dargestellt ist.

## Patentansprüche

1. Hydraulische Betätigungsanordnung, insbesondere für Deckel, Türen, Verdecke und dergleichen an Fahrzeugen, mit zumindest einem doppeltwirkenden Arbeitszylinder (1), dessen Arbeitsräume (2,2';3)über eine hydraulische Schaltungsanordnung (6) mit je einer Seite einer umschaltbaren Druckmittelquelle (7) in Verbindung stehen, **dadurch gekennzeichnet,** dass die beiden Arbeitsräume (2,2';3) des Arbeitszylinders (1) über ein schaltbares 2-Stellungsventil (11) direkt verbindbar sind.

2. Betätigungsanordnung nach Anspruch 1, dadurch gekennzeichnet, dass das 2-Stellungsventil (11), gegebenenfalls über eine Hebelanordnung, manuell schaltbar ist.

3. Betätigungsanordnung nach Anspruch 1, dadurch gekennzeichnet, dass das 2-Stellungsventil (11) über ein elektrisches Schaltelemente schaltbar ist.

4. Betätigungsanordnung nach einem der Ansprüche 1 bis 3, dadurch gekennzeichnet, dass das 2-Stellungsventil (11) als Sitzventil ausgebildet ist.
